# EUROPEAN PATENT APPLICATION

(11) **EP 4 825 670 A1**
(43) Date of publication of application: **21.10.2026**
(21) Application number: 25170771.7
(22) Date of filing: 15.04.2025
(51) Int. Cl.: B60R 21/207, B60R 21/231, B60R 21/2338

(54) **A SEAT-MOUNTED AIRBAG ASSEMBLY AND A VEHICLE SEAT IN WHICH SUCH ASSEMBLY IS ARRANGED**

(71) Applicant: Autoliv Development AB, 447 83 Vårgårda (SE); Renault s.a.s, 92100 Boulogne Billancourt (FR)
(72) Inventor: Charpentier, Frederic, 76220 Gournay-en-Bray (FR); Hellot, Laurent, 76220 Gournay-en-Bray (FR); Broggini, Laurent, 76220 Gournay-en-Bray (FR); Lengaigne, Laurent, 76220 Gournay-en-Bray (FR); Gailhard, Carole, 76220 Gournay-en-Bray (FR); Halgrin, Julien, 76220 Gournay-en-Bray (FR); Ribillard, Damien, 76220 Gournay-en-Bray (FR); Lagarrigue, Olivier, 78280 Guyancourt (FR); Ruffet, Renaud, 78280 Guyancourt (FR)
(74) Representative: AWA Sweden AB

(57) **Abstract**

A seat-mounted airbag assembly (1000A; 1000B) comprising a lateral airbag (101A; 101B) supported by a lateral side of a vehicle seat (1); a tensioning device (300) arranged at a seat pan (5) of the vehicle seat (1); and a longitudinally extending wrap-around restricting member (200A; 200B) extending across the lateral airbag from an upper portion of a seatback (3) of the vehicle seat to the tensioning device (300) is provided. The wrap-around restricting member is configured to be tensioned by the tensioning device to thereby form a reaction surface to the lateral airbag upon inflation and deployment. The assembly further comprises a biasing member (400) in the form of an elongated elastically stretchable body (401) which in its two ends is connected to the restricting member in connection points that are mutually displaced along the longitudinal extension LR of the restricting member. As seen in a condition when the body of the biasing member is in a relaxed position, a length LB of the biasing member as measured between the first and second connection points is smaller than a length LR of the restricting member as measured between the first and second connection points. A reclining angle between the seatback and the seat pan can be adjusted and a slack S in the restricting member can be accommodated by the body of the biasing member.

## Description

### Technical field

The present invention refers to a seat-mounted airbag assembly and to a vehicle seat in which such seat-mounted airbag assembly is arranged.

### Technical background

It is well known to use lateral airbags that are seat integrated. The airbags are typically arranged on one or both lateral sides of the seatback. The lateral airbag is typically supplemented with a wrap-around restricting member, such as a belt, that extends from an upper portion of a seatback, across the packed airbag along the lateral side of the seatback, along a lateral side of the seat pan and to a tensioning device that is arranged underneath the vehicle seat. The wrap-around restricting member has a length to allow free setting of the seatback angle at the user's choice during normal operation of the seat. In the event of an accident, the member is configured to be tensioned by the belt tensioning device and form a reaction surface to the airbag as it is inflated and deployed. The reaction surface promotes the airbag to be deployed in a direction towards the seat and the seated person.

The restricting member as such has a dimensioned length as measured between a first end thereof that connects to the seatback and a second end thereof that connects to the tensioning device. The dimensioned length must be adapted to allow the seatback to be freely reclined within its available setting range. The length must be long enough to allow the seatback to be raised to its fully upright position, i.e. to be pivoted in the forward direction towards the dashboard. This length is in fact longer that a length that is required to allow the seatback to be reclined to its lower most position, i.e. to be pivoted in the backward direction away from the dashboard. This difference in length results in that the restricting member will have a slack, i.e. an overlength, when the vehicle seat is in its normal position, which is typically represented by an upright driver's position. It has however been found that there is a risk that the slack causes problems in terms of a rattling noise, wear to the upholstery and also a risk of the slack getting pinched in the interface between the seat pan and the upholstery.

### Summary

It is an object of the present invention to provide a solution that provides control of the restricting member during normal operation of the vehicle seat.

The solution should strive to avoid that the restricting member entangles with other features in the vehicle seat and in the worst-case scenario gets pinched.

Another object is to provide a solution that controls the extension of the wrap-around member along the lateral side of the vehicle seat during normal operation of the seat while still allowing a free setting of the vehicle seat.

Yet another object is to provide a solution where the overlength of the restricting member does not cause any noise.

These and other objects that will be apparent from the following summary and description are achieved by a seat-mounted airbag assembly comprising:
a lateral airbag supported by a lateral side of a vehicle seat;
a tensioning device arranged at a seat pan of the vehicle seat;
a longitudinally extending wrap-around restricting member extending across the lateral airbag from an upper portion of a seatback of the vehicle seat to the tensioning device, wherein the wrap-around restricting member is configured to be tensioned by the tensioning device to thereby form a reaction surface to the lateral airbag upon inflation and deployment of the lateral airbag; and
a biasing member, said biasing member including an elongated elastically stretchable body having a first end and a second end; wherein
the first end is connected to the wrap-around restricting member in a first connection point and the second end is connected to the wrap-around restricting member in a second connection point, the first and second connection points being mutually displaced along the longitudinal extension of the wrap-around restricting member, and
wherein, as seen in a condition when the body of the biasing member is in a relaxed position, a length of the biasing member as measured between the first and second connection points is smaller than a length of the restricting member as measured between the first and second connection points, wherein a reclining angle between the seatback and the seat pan can be adjusted and a slack in the wrap-around restricting member can be accommodated by the body of the biasing member.

The invention provides a solution to the problems mentioned above by providing the wrap-around restricting member with a biasing member that runs alongside the restricting member along a limited extension of the restricting member. A first end of the biasing member is connected to the wrap-around restricting member in a first connection point and the second end of the biasing member is connected to the wrap-around restricting member in a second connection point. The two connection points are mutually displaced along the longitudinal extension of the wrap-around restricting member.

The length of the biasing member as seen in a condition when its body is relaxed, i.e. unloaded, and as measured between the first and second connection points is smaller than a length of the wrap-around restricting member as measured between the first and second connection points when the body is relaxed. This allows the reclining angle between the seatback and the seat pan to be freely adjusted within the allowed setting range while the slack in the restricting member is accommodated and hence controlled by the body of the biasing member. Hence, any tensioning load applied to the wrap-around restricting member during normal operation of the vehicle seat, i.e. when reclining the seatback within its available setting range will primarily be accommodated by the elastically stretchable body of the biasing member.

The slack in the wrap-around restricting member as measured between the points where the biasing member connects to the restricting member will only be fully removed when the biasing member has been stretched to such degree that the biasing member has a length that corresponds to the length of the wrap-around restricting member as measured along the longitudinal extension of the restricting member between the two points where the biasing member connects to the restricting member.

The actuation of the tensioning device may be configured to be coordinated with an inflation of the lateral airbag. Accordingly, in the event an accident should be detected by one or more sensors of the vehicle and where the ECU (Electrical Control Unit) of the vehicle determines that the accident could be mitigated by the associated lateral airbag, the airbag is inflated while also the tensioning device is activated to tension the wrap-around restricting member to thereby form a reaction surface to the airbag as it is inflated and deployed. The tensioning device may comprise an actuator and a pulling arrangement. The actuator may be a pyrotechnically operated piston which in one end is connected to the pulling arrangement. The wrap-around restricting member connects to the pulling arrangement. The tensioning device will tension the wrap-around restricting member so that it not only overcomes the slack but also tensions the restricting member to such degree that it forms the reaction surface to the lateral airbag as it inflates and deploys.

The biasing member may be fixedly connected to the restricting member in the first and second connection points. The fixation may by way of example be made by sewing, adhesive, welding or riveting, or a combination thereof.

The restricting member may be substantially non-stretchable as seen along its longitudinal direction.

The restricting member and the body of the biasing member may each be pliable as seen in a direction transverse the longitudinal direction thereof.

The body of the biasing member may be made of an elastomer and/or a rubber. The skilled person realizes that the body may be any type of member that acts as a spring.

The body of the biasing member may be a belt or a cord.

The restricting member may be a belt or a cord.

The body of the biasing member may be a belt and the portion of the restricting member to which the biasing member connects may be a cord. Alternatively, the body of the biasing member may be a cord and the portion of the restricting member to which the biasing member connects may be a belt. It is to be understood that the body of the biasing member and the portion of the restricting member to which the biasing member connects can have the same configuration, i.e. both of them being either a belt or a cord.

The term *"belt"* should in the context of the invention be understood as a long, slender band having a rectangular or substantially rectangular cross section. The belt may by way of example have a homogenous, extruded cross section or be a woven structure.

The term *"cord"* should in the context of the invention be understood as a long, slender rope, string or even a chain. The cross section may by way of example be circular or substantially circular. The cord may have a homogenous cross section or be made up of several strands that are twisted or woven together.

The wrap-around restricting member may be divided in two or more portions, where the portions have different geometrical cross-sections. By dividing the wrap-around restricting member along its longitudinal extension into two or more portions with different geometrical cross-sections, different technical effects may be provided for as seen along its longitudinal extension. The belt, which as such has a substantially rectangular cross section with two opposing, generally flat surfaces, may form a relatively wide and large reaction surface to the airbag upon inflation and deployment thereof. Further, the cord, which as such has a circular or substantially circular cross section will more easily conform to and accommodate different spatial orientations that may apply along the lateral side of the vehicle seat as seen along the seatback and the seat pan respectively, and not at least when connecting the restricting member to the tensioning device that typically is arranged underneath the vehicle seat.

The body of the biasing member may have a spring constant being lower than a spring constant of the restricting member.

The seat-mounted airbag assembly may further comprise a flexible sheath that encapsulates at least a portion of the restricting member that extends between the first and second connecting points and/or the biasing member. The flexible sheath may by way of example be formed by a textile material. The sheath prevents the biasing member and/or the restricting member from wear and lowers the friction against the seat pan and the upholstery. Also, the pre-tensioning reduces the risk of any noise being generated by the restricting member and/or biasing member coming in un-controlled contact with the seat frame which as such contains metal.

The body of the biasing member may be configured to be arranged along a lateral side wall of the seat pan in a position between the tensioning device and a pivot point between the seatback and the seat pan. The portion of the wrap-around restricting member that extends along the lateral side wall of the seat pan in a position between the tensioning device and the pivot point between the seatback and the seat pan may be formed as cord. Hence, the biasing member may be configured to a portion of the wrap-around restricting member being a cord.

According to another aspect, the invention refers to a vehicle seat, wherein a first seat-mounted airbag assembly according to any of claims 1-10 is arranged on a first lateral side of the vehicle seat, and a second seat-mounted airbag assembly according to any of claims 1-10 is arranged on a second lateral side of the vehicle seat.

The first and the second seat-mounted airbag assemblies may have the same design and functionality. The features and advantages discussed above in view of the first seat-mounted airbag assembly are equally and directly applicable to the second seat-mounted airbag assembly. Hence, for the sake of efficiency and to avoid undue repetition, reference is made to the sections above.

The first and the second seat-mounted airbag assemblies are preferably arranged on opposite lateral sides of the vehicle seat to thereby provide a protection to the seated passenger from two opposite sides, one from the near side (closest to the door) and one from the far side (towards the longitudinal centreline of the vehicle). At least one of the two lateral airbags may be designed to deploy to form a frontal protection to thereby protect the chest portion and also provide a facial protection. The first and the second lateral airbags may be symmetric.

The wrap-around restricting member of the first seat-mounted airbag assembly and the wrap-around restricting member of the second seat-mounted airbag assembly may connect to a common tensioning device. The tensioning device may comprise an actuator and a pulling arrangement. The actuator may be a pyrotechnically operated piston which in one end is connected to the pulling arrangement. The wrap-around restricting members connects to the pulling arrangement. The common tensioning device may be arranged centrally on the lower side of the seat pan or underneath the vehicle seat. By being centrally arranged, the tensioning of the first and second wrap-around restricting members will be substantially uniform.

A further scope of applicability of the present invention will become apparent from the detailed description given below. However, the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular parts of the device described or steps of the methods described as such device and method may vary. It is also to be understood that the terminology used herein is for purpose of describing particular embodiments only and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The invention will be described in more detail with reference to the appended schematic drawings, which show examples of a presently preferred embodiment of the invention.
Fig. 1 is a schematic overview of one embodiment of a vehicle seat with two seat-mounted airbag assemblies, each comprising a lateral airbag arranged in the seatback.
Fig. 2 is a schematic front view of one embodiment of a vehicle seat with two seat-mounted airbag assemblies where the two airbags have been deployed.
Fig. 3 is a schematic side view of a vehicle seat with a seat-mounted airbag assembly where the airbag has been deployed.
Figs. 4A-4C discloses highly schematically three different settings of a vehicle seat.
Fig. 5 discloses, highly schematically, the biasing member as connected to a portion of a wrap-around restricting member.
Figs. 6A-6C schematically discloses the operation of the invention.
Fig. 7 schematically discloses the seat-mounted airbag assembly as mounted to a vehicle seat.
Fig. 8 discloses one example of a flexible sheath.

### Detailed description

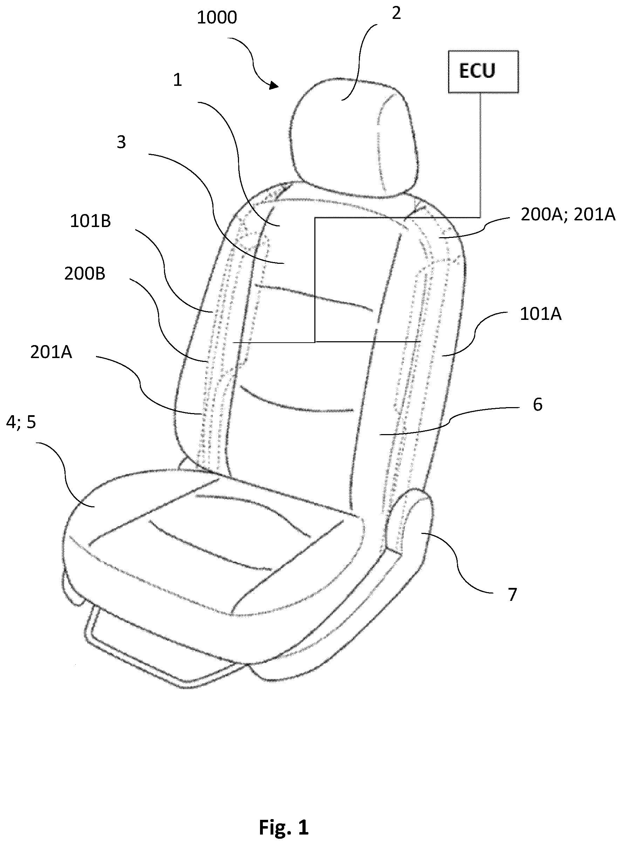

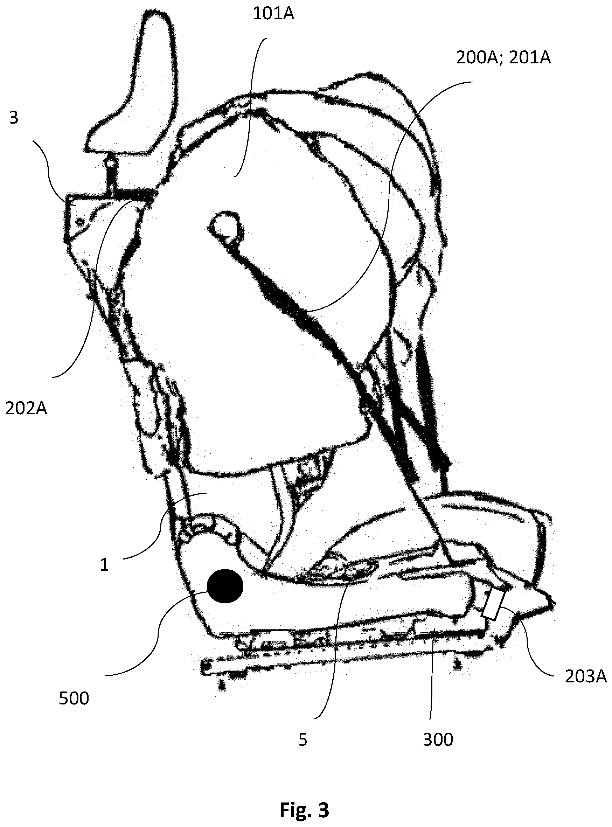

Starting with Fig. 1, one embodiment of a vehicle seat 1 with two seat-mounted airbag assemblies 1000 with a first and a second lateral airbag 101A; 101B is schematically disclosed. The vehicle seat 1 comprises a head rest 2, a seatback 3 and a seat cushion 4 supported by a seat pan 5. A trimming 7 extends along the opposing lateral sides of the seat cushion 4. The seat pan 5 is arranged inside the vehicle seat 1 below the seat cushion 4 and is hence not visible in Fig. 1 but can be seen in Fig. 3. Each lateral side of the seatback 3 comprises an airbag 101A; 101B. A wrap-around restricting member 200A, 200B extends along an outer surface of each lateral airbag 101A; 101B. As will be described below, the wrap-around restricting member 200A, 200B comprises at least one longitudinal member that extends from an upper end of the seatback 3, along the outer lateral side of the seatback 3, along the lateral side of the seat pan 5 and down to a tensioning device 300 that is arranged underneath the vehicle seat 1. The tensioning device 300 is hidden underneath the vehicle seat 1 but can be seen in Fig. 3.

The airbags 101A; 101B and wrap-around restricting members 200A, 200B are arranged inside an upholstery 6. The upholstery 6 is configured to rupture as the airbags 101A; 101B are inflated and deployed.

Each airbag 101A; 101B is connected to an inflator (not illustrated) which in turn is connected to an Electrical Control Unit (ECU). This is all well known to the skilled person and not further discussed.

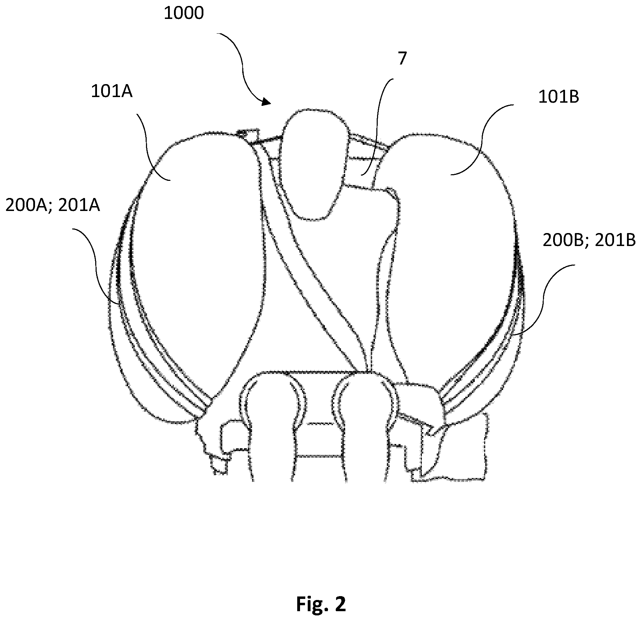

Turning to Fig. 2, the seat-mounted airbag assemblies 1000 are disclosed in a condition where the two lateral airbags 101A; 101B have been inflated and fully deployed. The two airbags 101A; 101B are disclosed as being mirrored, i.e., having the same design on both sides of the vehicle seat 1. The skilled person realizes that the airbags 101A; 101B may be designed in a number of different ways depending on which parts of the body of the seated passenger they are intended to protect. As a non-limiting example, the airbags 101A; 101B may be designed to provide not only a sidewards protection, but also a frontal protection. Also, it is to be understood that the two airbags 101A; 101B may have different designs. It is further to be understood that one of the airbags 101A; 101B may be omitted. The seat-mounted airbag assembly 1000 may accordingly comprise one lateral airbag 101A; 101B only.

The first lateral airbag 101A is associated with a first wrap-around restricting member 200A and the second lateral airbag 101B is associated with a second wrap-around restricting member 200B. The at least one longitudinal member 201A, 201B of each wrap-around restricting member 200A, 200B is configured to be tensioned and form a reaction surface to its associated airbag 101A; 101B when the airbag is inflated and deployed.

As can be seen in Fig. 2, each wrap-around restricting member 200A, 200B may comprise more than one longitudinal member 201A, 201B. Fig. 2 discloses an embodiment where each wrap-around restricting member 200A, 200B comprises two longitudinal members 201A; 201B that run side by side. The wrap-around restricting members 200A, 200B connect to one and the same tensioning device (omitted in Fig. 2). It is to be understood that each wrap-around restricting member 200A, 200B may connect to its own tensioning device.

Now turning to Fig. 3, a side view of a vehicle seat 1 is disclosed. The vehicle seat 1 is disclosed in a condition where the lateral airbags have been inflated and fully deployed. The vehicle seat is provided with one arrangement on each side. These may have the same design and functionality, whereby only one of the two is discussed below.

The trimming 7 on the vehicle seat 1 (see Fig. 1) has been removed to better illustrate the seat pan 5 and the tensioning device 300.

The seatback 3 connects to the seat pan 5 via a rear seat pan cross member 500 that extends between two opposing lateral side members of the seat pan 5 and pivotably connects the seatback 3 to the seat pan 5.

The wrap-around belt restricting member 200A comprises a longitudinal member 201A having an upper end 202A that is fixedly connected to a top portion of the seatback 3, and a lower end 203A that is fixedly connected to the tensioning device 300 that is arranged underneath the vehicle seat 1. As given above, the wrap-around belt restricting member 200A may comprise more than one longitudinal member 201A. Fig. 3 discloses two longitudinal members 201A that merge into one member that connects to the tensioning device 300. Only one longitudinal member 201A will be described in detail below. It is to be stressed that the wrap-around belt restricting member may comprise one longitudinal member only or more than two longitudinal members.

The longitudinal member 201A extends along an exterior side of the inflated airbag 101A. The longitudinal member 201A is disclosed as having a substantially flat cross section along its contact surface with the airbag 101A. The longitudinal member 201A forms a reaction surface to the associated airbag 101A during inflation and deployment of the airbag 101A. The longitudinal member 201A may be seen as an external tether that forces the airbag 101A to conform to the body of the seated passenger.

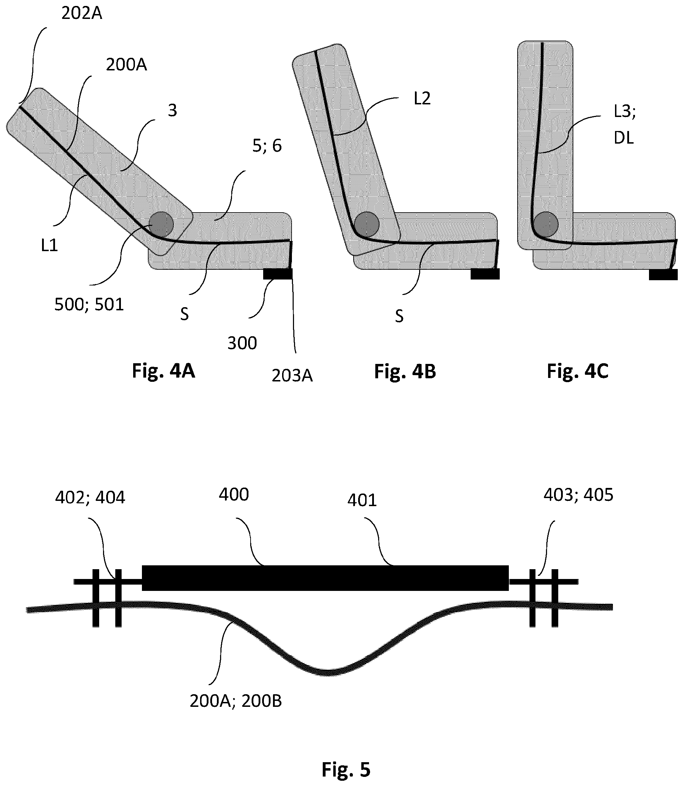

Now turning to Figs. 4A-4C the dimensioning length of the wrap-around restricting member in the context of the invention will be disclosed. Figs. 4A-4C disclose, highly schematically, a side view of a vehicle seat 1. Hence, only one wrap-around restricting member is disclosed.

Starting with Fig. 4A, the vehicle seat 1 comprises a seatback 3 that is pivotably connected to a seat pan 5 via the rear seat pan cross member 500. A first end 202A of the wrap-around restricting member 200A is connected to an upper portion of the seatback 3 and a second end 203A thereof is connected to the tensioning device 300 that is arranged below the seat pan 5. The restricting member 200A is arranged to follow the lateral portion of the seatback 3 and the set pan 5 respective while being in contact with a guide 501 that is arranged in the interface between the seatback 3 and the seat pan 5. The position of the guide 501 is disclosed as coinciding with the rear seat pan cross member 500 that pivotably interconnects the seatback 3 with the seat pan 5.

The restricting member 200A as such has a dimensioning length DL, as measured between the first end 202A thereof that connects to the seatback 3 and the second end 203A thereof that connects to the tensioning device 300. The dimensioned length DL must be adapted to allow the seatback 3 to be freely reclined/raised within its intended setting range. The dimensioned length DL must be long enough to allow the seatback 3 to be raised to its fully raised and upright position (Fig. 4C). The length L3 that is required to have the seatback 3 fully raised is in fact longer than a length L1 that is required to allow the seatback 3 to be reclined to its lower most position (Fig. 4A) and also longer than a length L2 that is required when the seatback 3 is in its normal position, which is typically represented by an upright driver's position (Fig. 4B). Hence, L3>L2>L1. Accordingly, the dimensioned length DL should equal L3 or be slightly larger. The length difference between L3 and L1 results in that the restricting member 200A will have a slack S, i.e. an overlength, when the seatback 3 is in its normal position (Fig. 4B) and its fully reclined position (Fig. 4A). It has been found that there is a risk that the slack S causes problems in terms of a rattling noise, wear to the upholstery 6 and also a risk of the slack getting pinched in the interface between the seat pan 5 and the upholstery 6.

Now turning to Fig. 5 the invention will be disclosed. Fig. 5 discloses, highly schematically, a portion of a wrap-around restricting member 200A; 200B and a biasing member 400.

The biasing member 400 includes an elongated elastically stretchable body 401 having a first end 402 and a second end 403. The first end 402 is connected to the restricting member 200A; 200B in a first connection point 404 and the second end 403 is connected to the restricting member in a second connection point 405. The biasing member 400 is fixedly connected to the restricting member 200A; 200B in the first and second connection points 404, 405. The fixation may by way of example be made by sewing, adhesive, welding or riveting, or a combination thereof.

The first and second connection points 404, 405 are mutually displaced along the longitudinal extension of the restricting member 200A; 200B. Accordingly, the biasing member 400 runs alongside the restricting member 200A; 200B along a limited extension of the restricting member.

The body 401 of the biasing member 400 is made of an elastomer and/or a rubber. The body 401 has a spring constant being lower than a spring constant of the restricting member 200A.

The restricting member 200A; 200B may be substantially non-stretchable as seen along its longitudinal direction. The skilled person realises that all materials in theory has an inherent stretch. By *"substantially non-stretchable"* is meant that the member is experienced as being stiff when subjected to a pulling force. A seat belt can be seen as one example of a belt being substantially non-stretchable. The

The restricting member 200A; 200B and the body 401 of the biasing member 400 may each be pliable as seen in a direction transverse the longitudinal direction thereof. The pliability allows the biasing member 400 and the restricting member 200A; 200B to conform to the shape of a vehicle seat.

The body 401 of the biasing member 400 may be a belt or a cord. The restricting member 200A; 200B may be a belt or a cord. The body 401 of the biasing member 400 may be a belt and the portion of the restricting member 200A; 200B to which the biasing member 400 connects may be a cord. Alternatively, the body 401 of the biasing member 400 may be a cord and the portion of the restricting member 200A; 200B to which the biasing member 400 connects may be a belt. It is to be understood that the body 401 of the biasing member 400 and the portion of the restricting member 200A; 200B to which the biasing member 400 connects can have the same configuration, i.e. both of them being either a belt or a cord.

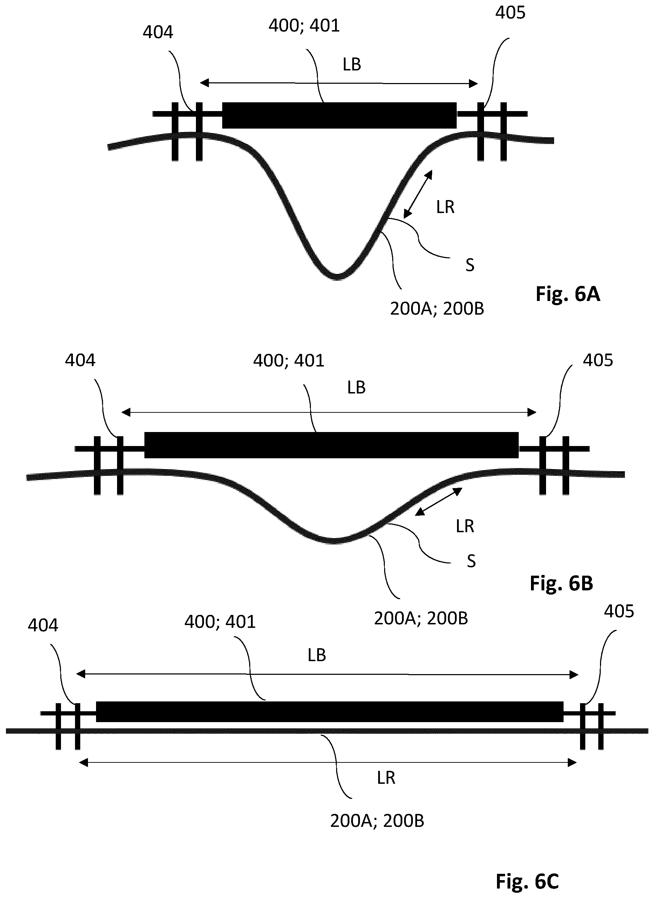

The operation of the invention will be described in the following with reference to Figs. 6A-6C.

Starting with Fig. 6A. In a condition when the body 401 of the biasing member 400 is in a relaxed, i.e. unloaded, position, a length LB of the biasing member 400 as measured between the first and second connection points 404, 405 is smaller than a length LR of the restricting member 200A; 200B as measured between the first and second connection points 404, 405. This will be the case when the seatback 3 is set to its fully reclined position as is disclosed in Fig. 4A. As noted, the restricting member 200A; 200B has a slack S.

Fig. 6B in combination with Fig. 4B illustrates a position in which the seatback 3 is set to its normal position. The body 401 of the biasing member 400 has been tensioned but the length LB of the biasing member 400 as measured between the first and second connection points 404, 405 is still smaller than a length LR of the restricting member 200A as measured between the first and second connection points 404, 405. As noted, the restricting member 200A; 200B still has a slack S.

Fig. 6C in combination with Fig. 4C illustrates a position in which the seatback 3 is moved from the fully reclined position towards its fully upright position. The body 401 of the biasing member 400 will be tensioned to such degree that the length LB of the biasing member 400 as measured between the first and second connection points 404, 405 corresponds to the length LR of the restricting member 200A; 200B as measured between the first and second connection points 404, 405. Hence, the slack S in the restricting member is now removed and the biasing member 400 extends alongside and in parallel with the restricting member 200A; 200B. The wrap-around restricting member 200A; 200B can in this condition transfer a pulling force.

Accordingly, the provision of a biasing member 400 that cooperates with and extends alongside a limited length portion of the wrap-around restricting member 200A; 200B provides the effect that the reclining angle between the seatback 3 and the seat pan 5 can be adjusted. The slack S in the restricting member 200A can be accommodated by and hence be controlled by the body 401 of the biasing member 400. Hence, any tensioning load applied to the wrap-around restricting member during normal operation of the vehicle seat, i.e. when reclining the seatback 3 within its available setting range, will primarily be accommodated by the elastically stretchable body 401 of the biasing member 400.

The slack S in the wrap-around restricting member 200A; 200B as measured between the points 404, 405 where the biasing member 400 connects to the restricting member 200A; 200B will only be fully removed when the biasing member 400 has been stretched to such degree that the biasing member 400 has a length LB that corresponds to the length of the slack S, i.e. the length LR of the wrap-around restricting member 200A; 200B as measured along the longitudinal extension of the restricting member between the two connection points 404, 405 where the biasing member 400 connects to the restricting member 200A.

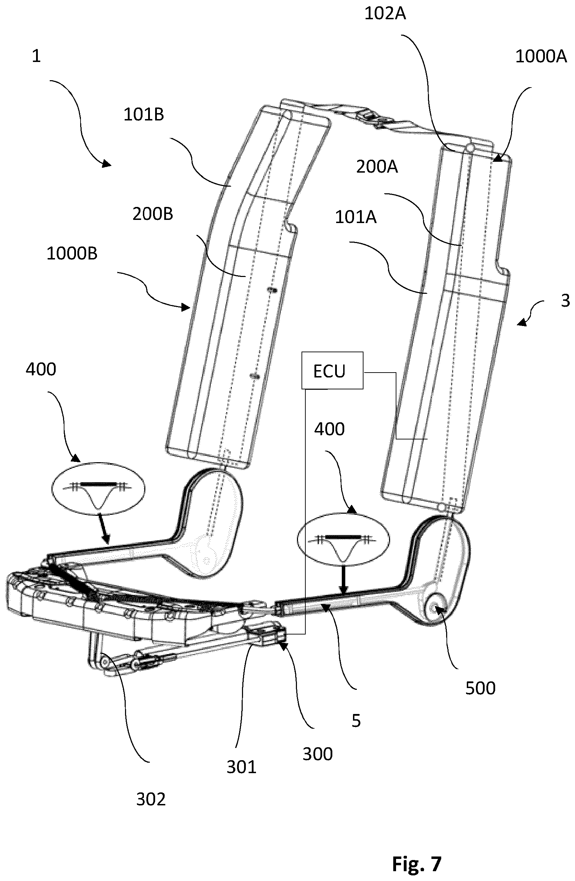

Now turning to Fig. 7 one embodiment of the seat-mounted airbag assembly 1000A; 1000B as a whole is disclosed as mounted to a vehicle seat 1. Components such as the seat pan, the seatback and upholstery have been removed to facilitate understanding. The biasing members 400 are preferably arranged along a respective lateral side wall of the seat pan 5 in a position between the tensioning device 300 and a pivot point between the seatback 3 and the seat pan 5. The pivot point is typically formed by the rear seat pan cross member 500 that pivotably interconnects the seatback 3 with the seat pan 5. The portion of the restricting member 200A; 200B that extends along the lateral side wall of the seat pan 5 in a position between the tensioning device 300 and the pivot point between the seatback 3 and the seat pan 5 may be formed as cord. Hence, the biasing member preferably connects to a portion being a cord. One end of the cord connects to the tensioning device 300.

The wrap-around restricting member 200A of the first seat-mounted airbag assembly 1000A and the wrap-around restricting member 200B of the second seat-mounted airbag assembly 1000B may, as disclosed, connect to a common tensioning device 300. The common tensioning device may be arranged centrally on the lower side of the seat pan 5 or underneath the vehicle seat 1. By being centrally arranged, the tensioning of the first and second wrap-around restricting members will be substantially uniform.

The actuation of the tensioning device 300 may be configured to be coordinated with an inflation of the lateral airbags 101A; 101B. Accordingly, in the event an accident should be detected by one or more sensors of the vehicle and where the ECU (Electrical Control Unit) of the vehicle determines that the accident could be mitigated by the associated lateral airbag, the airbags 101A; 101B are inflated while also the tensioning device 300 is activated to tension the wrap-around restricting members 200A; 200B to thereby form a respective reaction surface to the airbags 101A; 101B as they are inflated and deployed. The tensioning device 300 comprises an actuator 301 and a pulling arrangement 302. The actuator 301 may be a pyrotechnically operated piston which in one end is connected to the pulling arrangement 302. The wrap-around restricting members 200A; 200B connect to the pulling arrangement 302. The tensioning device 300 will tension the wrap-around restricting member 200A; 200B so that it not only overcomes any slack S but also tensions the restricting members 200A; 200B to such degree that they form the reaction surfaces to the lateral airbags 101A; 101B as they inflate and deploy. The tensioning of the wrap-around restricting members 200A; 200B by means of the tensioning device is made by displacing the end of the restricting member which connects to the tensioning device 300 via the pulling arrangement 302.

The first and the second seat-mounted airbag assemblies 1000A are preferably arranged on opposite lateral sides of the vehicle seat 1 to thereby provide a protection to the seated passenger from two opposite sides, one from the near side (closest to the door) and one from the far side (towards the longitudinal centreline of the vehicle). At least one of the two lateral airbags 101A, 101B may be designed to deploy to form a frontal protection to thereby protect the chest portion and also provide a facial protection. The first and the second lateral airbags 101A, 101B may be symmetric. This is exemplified in Fig. 3.

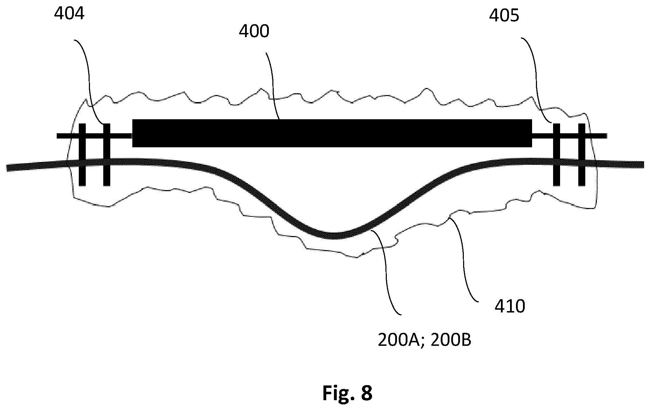

Now turning to Fig. 8. The seat-mounted airbag assembly may further comprise a flexible sheath 410 that encapsulates at least a portion of the restricting member 200A; 200B that extends between the first and second connecting points 404, 405 and/or the biasing member 400. The flexible sheath 410 may by way of example be formed by a textile material. The sheath 410 prevents the biasing member 400 and/or the restricting member 200A; 200B from wear and lowers the friction against the seat pan and the upholstery. Also, the sheath 410 reduces the risk of any noise being generated by the restricting member 200A; 200B and/or biasing member 400 coming in un-controlled contact with the seat frame which as such contains metal.

## Claims

1. A seat-mounted airbag assembly (1000A; 1000B) comprising:
a lateral airbag (101A; 101B) supported by a lateral side of a vehicle seat (1);
a tensioning device (300) arranged at a seat pan (5) of the vehicle seat (1);
a longitudinally extending wrap-around restricting member (200A; 200B) extending across the lateral airbag from an upper portion of a seatback (3) of the vehicle seat to the tensioning device (300), wherein the wrap-around restricting member (200A; 200B) is configured to be tensioned by the tensioning device (300) to thereby form a reaction surface to the lateral airbag (101A, 101B) upon inflation and deployment of the lateral airbag; and
a biasing member (400), said biasing member including an elongated elastically stretchable body (401) having a first end (402) and a second end (403); wherein
the first end (402) is connected to the wrap-around restricting member (200A; 200B) in a first connection point (404) and the second end (403) is connected to the wrap-around restricting member (200A; 200B) in a second connection point (405), the first and second connection points (404, 405) being mutually displaced along the longitudinal extension LR of the wrap-around restricting member, and
wherein, as seen in a condition when the body (401) of the biasing member (400) is in a relaxed position, a length LB of the biasing member (400) as measured between the first and second connection points (404, 405) is smaller than a length LR of the wrap-around restricting member (200A; 200B) as measured between the first and second connection points (404, 405), wherein a reclining angle between the seatback (3) and the seat pan (5) can be adjusted and a slack S in the restricting member (200A; 200B) can be accommodated by the body (401) of the biasing member (400).

2. The seat-mounted airbag assembly according to claim 1, wherein the biasing member (400) is fixedly connected to the wrap-around restricting member (200A, 200B) in the first and second connection points (404, 405).

3. The seat-mounted airbag assembly according to claim 1 or 2, wherein the wrap-around restricting member (200A; 200B) is substantially non-stretchable as seen along its longitudinal direction.

4. The seat-mounted airbag assembly according to any of the preceding claims, wherein the wrap-around restricting member (200A; 200B) and the body (401) of the biasing member (400) each are pliable as seen in a direction transverse the longitudinal direction thereof.

5. The seat-mounted airbag assembly according to any of the preceding claims, wherein the body (401) of the biasing member (400) is made of an elastomer and/or rubber.

6. The seat-mounted airbag assembly according to any of the preceding claims, wherein the body (401) of the biasing member (400) is a belt or a cord.

7. The seat-mounted airbag assembly according to any of the preceding claims, wherein the wrap-around restricting member (200A; 200B) is a belt or a cord.

8. The seat-mounted airbag assembly according to any of the preceding claims, wherein the body (401) of the biasing member (400) has a spring constant being lower than a spring constant of the restricting member (200A; 200B).

9. The seat-mounted airbag assembly according to any of the preceding claims, further comprising a flexible sheath (410) that encapsulates at least a portion of the restricting member (200A; 200B) that extends between the first and second connecting points (404, 405).

10. The seat-mounted airbag assembly according to any of the preceding claims, wherein the body (410) of the biasing member (400) is configured to be arranged along a lateral side wall of the seat pan (5) in a position between the tensioning device (300) and a pivot point between the seatback (3) and the seat pan (5).

11. A vehicle seat, wherein a first seat-mounted airbag assembly (1000A) according to any of claims 1-10 is arranged on a first lateral side of the vehicle seat (1), and a second seat-mounted airbag assembly (1000B) according to any of claims 1-10 is arranged on a second lateral side of the vehicle seat (1).
